# EUROPEAN PATENT SPECIFICATION

(11) **EP 4 116 109 B1**
(45) Date of publication and mention of the grant of the patent: **02.10.2024**
(21) Application number: 22178919.1
(22) Date of filing: 14.06.2022
(51) Int. Cl.: B60C 9/20, B60C 9/22, B60C 15/024

(54) **HEAVY DUTY TIRE**
SCHWERLASTREIFEN
PNEU SUPER-RÉSISTANT

(30) Priority: 07.07.2021 JP 2021112529
(43) Date of publication of application: 11.01.2023
(73) Proprietor: Sumitomo Rubber Industries, Ltd., Kobe-shi, Hyogo-ken 651-0072 (JP)
(72) Inventor: KODA, Yuriko, Kobe-shi 651-0072 (JP)
(74) Representative: Manitz Finsterwald Patent- und Rechtsanwaltspartnerschaft mbB

(56) References cited:
- EP-A1- 1 787 825
- EP-A1- 2 065 226
- EP-A1- 2 803 505
- EP-A1- 3 838 623
- WO-A1-2017/208214
- JP-A- 2011 016 337
- JP-A- 2017 043 281

## Description

### TECHNICAL FIELD

The present invention relates to heavy duty tires.

This application claims priority on Japanese Patent Application No. 2021-112529 filed on July 7, 2021.

### BACKGROUND ART

For heavy duty tires, the application of a technology for suppressing radial growth of a tire has been considered in order to prevent occurrence of uneven wear. For example, in the tire disclosed in PATENT LITERATURE 1 below, a band including a band cord extending substantially in a circumferential direction is adopted in order to suppress radial growth of the tire.

### CITATION LIST

### [PATENT LITERATURE]

PATENT LITERATURE 1: International Publication No. WO2014/010091

A tire in accordance with the preamble of claim 1 is known from WO 2017/208214 A1. Related tires are described in EP 1 787 825 A1, JP 2011 016337 A, EP 2 803 505 A1 and JP 2017 043281 A.

### SUMMARY OF THE INVENTION

### [TECHNICAL PROBLEM]

When a tire expands, for example, each side portion thereof stretches in the radial direction. When a band is used in order to prevent occurrence of uneven wear, the band suppresses the stretch of each side portion. Depending on the degree of suppression, there is a concern that specific strain may occur in each side portion.

A large load acts on each bead portion of a heavy duty tire. In a low-flatness tire having a nominal aspect ratio of 65% or less, each side portion is shorter than that in a high-flatness tire. Each side portion of the low-flatness tire is likely to be influenced by strain generated in a bead portion thereof.

The use of a band is effective for preventing occurrence of uneven wear. When a band is used for a low-flatness tire, strain is likely to occur in each side portion thereof. There is a concern that damage due to strain may occur in the side portion; in other words, the durability of the tire may decrease.

The present invention has been made in view of such circumstances, and an object of the present invention is to provide a heavy duty tire that can ensure durability and improve uneven wear resistance.

### [SOLUTION TO PROBLEM]

The object is solved by a tire having the features of claim 1. Sub-claims are directed to preferred embodiments of the invention.

A heavy duty tire according to an aspect of the present invention has a nominal aspect ratio of 65% or less. The tire includes: a tread that comes into contact with a road surface; a pair of sidewalls that are each connected to an end of the tread and located inward of the tread in a radial direction; a pair of chafers that are each located inward of the sidewall in the radial direction and come into contact with a rim; a pair of beads that are each located inward of the chafer in an axial direction; and a band that is located inward of the tread in the radial direction and includes a spirally wound band cord. At least three circumferential grooves are formed on the tread, whereby at least four land portions are formed in the tread. Among the at least three circumferential grooves, a circumferential groove located on each outer side in the axial direction is a shoulder circumferential groove, and a land portion located outward of the shoulder circumferential groove in the axial direction is a shoulder land portion. The band includes a full band having ends opposed to each other across an equator plane, and a pair of edge bands located outward of the ends of the full band in the radial direction. An outer surface of each chafer has a fitting recess into which a flange of the rim fits. A ratio of a distance in the axial direction from the shoulder circumferential groove to the end of the full band, to a width in the axial direction of the shoulder land portion, is not less than 10% and not greater than 50%.

Preferably, in the heavy duty tire, the fitting recess has a concave curved surface whose contour in a meridian cross-section of the tire is an arc. The concave curved surface has a radius of not less than 5.0 mm and not greater than 40.0 mm.

Preferably, in the heavy duty tire, a ratio of a width of the tread to a cross-sectional width of the tire is not less than 0.60 and not greater than 0.90.

Preferably, in the heavy duty tire, a ratio of a width of the band to a width of the tread is not less than 0.60 and not greater than 0.90.

Preferably, in the heavy duty tire, each end of the full band is located outward of the shoulder circumferential groove in the axial direction.

Preferably, in the heavy duty tire, a distance in the axial direction from the end of the full band to an inner end of the edge band is not less than 10 mm.

### [ADVANTAGEOUS EFFECTS OF THE INVENTION]

According to the present invention, a heavy duty tire that can ensure durability and improve uneven wear resistance is obtained.

### BRIEF DESCRIPTION OF DRAWINGS

FIG. 1 is a cross-sectional view showing a part of a heavy duty tire according to an embodiment of the present invention.
FIG. 2 is a schematic diagram illustrating the configuration of a reinforcing layer.
FIG. 3 is an enlarged cross-sectional view showing a tread portion of the tire in FIG. 1.
FIG. 4 is an enlarged cross-sectional view showing a bead portion of the tire in FIG. 1.
FIG. 5 is an enlarged cross-sectional view showing a tread portion of a heavy duty tire according to another embodiment of the present invention.
FIG. 6 is a schematic diagram illustrating the configuration of a reinforcing layer.

### DETAILED DESCRIPTION

The following will describe in detail the present invention based on preferred embodiments with appropriate reference to the drawings.

In the present invention, a state where a tire is fitted on a normal rim, the internal pressure of the tire is adjusted to a normal internal pressure, and no load is applied to the tire is referred to as a normal state.

In the present invention, unless otherwise specified, the dimensions and angles of each component of the tire are measured in the normal state. The dimensions and angles of each component in a meridian cross-section of the tire, which cannot be measured in a state where the tire is fitted on the normal rim, are measured in a cross-section of the tire obtained by cutting the tire along a plane including a rotation axis, with the distance between right and left beads being made equal to the distance between the beads in the tire that is fitted on the normal rim.

The normal rim means a rim specified in a standard on which the tire is based. The "standard rim" in the JATMA standard, the "Design Rim" in the TRA standard, and the "Measuring Rim" in the ETRTO standard are normal rims. A rim in the present invention means a normal rim unless otherwise specified.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, the "nominal aspect ratio" is the "nominal aspect ratio" included in "tyre designation" specified in JIS D4202 "Automobile tyres-Designation and dimensions".

In the present invention, a tread portion of the tire is a portion of the tire that comes into contact with a road surface. A bead portion is a portion of the tire that is fitted to a rim. A side portion is a portion of the tire that extends between the tread portion and the bead portion. The tire includes a tread portion, a pair of bead portions, and a pair of side portions as portions thereof.

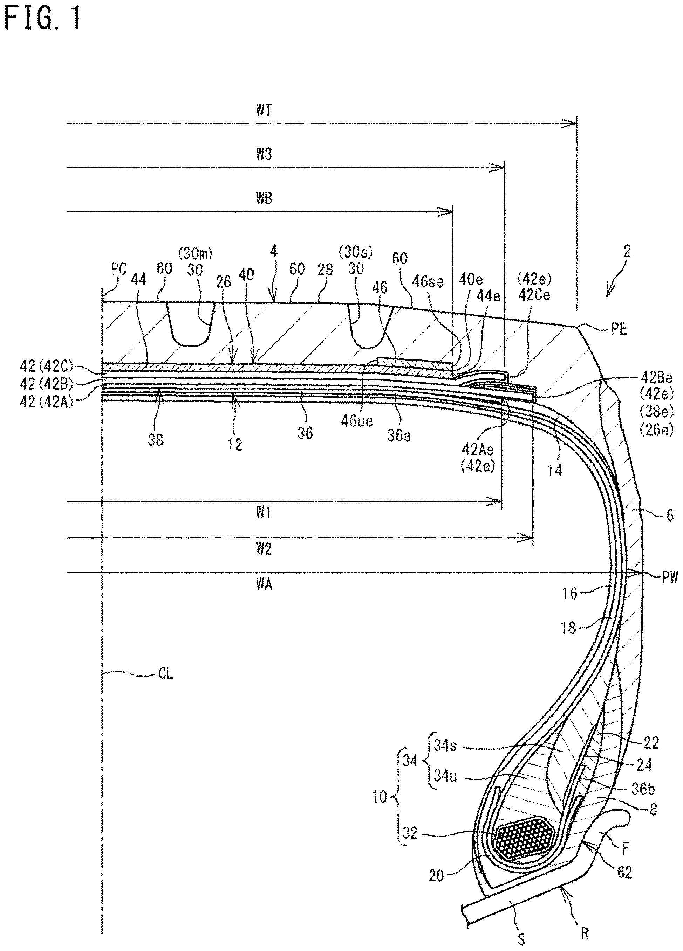

The rim includes a seat (a member denoted by reference sign S in FIG. 1) and a flange (a member denoted by reference sign F in FIG. 1). When the tire is fitted to the rim, the inner circumferential surface of the bead portion is placed on the seat, and the outer surface of the bead portion comes into contact with the flange.

In the present invention, the number of cords included per 5 cm of a tire element, including aligned cords, is represented as the density of cords included in this element (unit: ends/5 cm). Unless otherwise specified, the density of the cords is obtained in a cross-section of the element obtained by cutting the element along a plane perpendicular to the longitudinal direction of the cords.

FIG. 1 shows a part of a heavy duty tire 2 (hereinafter, also referred to simply as "tire 2") according to an embodiment of the present invention. The tire 2 is mounted to a vehicle such as a truck and a bus. The nominal aspect ratio of the tire 2 is not greater than 65%. In other words, the tire 2 has a nominal aspect ratio of 65% or less. The tire 2 is a low-flatness tire.

FIG. 1 shows a part of a cross-section (hereinafter, also referred to as meridian cross-section) of the tire 2 along a plane including the rotation axis of the tire 2. In FIG. 1, the right-left direction is the axial direction of the tire 2, and the up-down direction is the radial direction of the tire 2. The direction perpendicular to the surface of the drawing sheet of FIG. 1 is the circumferential direction of the tire 2. An alternate long and short dash line CL represents the equator plane of the tire 2.

In FIG. 1, the tire 2 is fitted on a rim R. The rim R is a normal rim. The interior of the tire 2 is filled with air to adjust the internal pressure of the tire 2. The tire 2 fitted on the rim R is also referred to as a tire-rim assembly. The tire-rim assembly includes the rim R and the tire 2 fitted on the rim R.

In FIG. 1, a position indicated by reference sign PW is an outer end in the axial direction of the tire 2. In the case where decorations such as patterns and letters are present on the outer surface of the tire 2, the outer end PW is specified on the basis of a virtual outer surface obtained on the assumption that the decorations are not present.

In FIG. 1, a length indicated by reference sign WA is the maximum width of the tire 2, that is, the cross-sectional width (see JATMA or the like) of the tire 2. The cross-sectional width WA of the tire 2 is the distance in the axial direction from one outer end PW to the other outer end PW. Each outer end PW is a position (hereinafter, maximum width position) at which the tire 2 has the maximum width.

The tire 2 includes a tread 4, a pair of sidewalls 6, a pair of chafers 8, a pair of beads 10, a carcass 12, a pair of cushion layers 14, an inner liner 16, an insulation 18, a pair of steel fillers 20, a pair of interlayer strips 22, a pair of edge strips 24, and a reinforcing layer 26.

The tread 4 comes into contact with a road surface at an outer surface thereof. The outer surface of the tread 4 is a tread surface 28. In FIG. 1, reference sign PC represents the point of intersection of the tread surface 28 and the equator plane CL. The point of intersection PC corresponds to the equator of the tire 2.

In FIG. 1, reference sign PE represents an end of the tread surface 28. A length indicated by reference sign WT is the width of the tread 4. The width WT of the tread 4 is the distance in the axial direction from one end PE of the tread surface 28 to the other end PE of the tread surface 28. When the ends PE of the tread surface 28 cannot be identified from the appearance, the position on the tread surface 28 corresponding to each outer end in the axial direction of a ground-contact surface obtained when the normal load is applied as a vertical load to the tire 2 in the normal state with a camber angle of the tire 2 being set to 0° and the tire 2 is brought into contact with a road surface that is a flat surface, is used as each end PE of the tread surface 28.

The tread 4 is formed from a crosslinked rubber. The tread 4 includes a cap layer and a base layer which are not shown. The cap layer is formed from a crosslinked rubber for which wear resistance and grip performance are taken into consideration, and forms the tread surface 28. The base layer is formed from a crosslinked rubber that has low heat generation properties, and is located inward of the cap layer.

In the tire 2, at least three circumferential grooves 30 are formed on the tread 4. On the tread 4 of the tire 2 shown in FIG. 1, four circumferential grooves 30 are formed. These circumferential grooves 30 are aligned in the axial direction and continuously extend in the circumferential direction.

Among the four circumferential grooves 30 formed on the tread 4, the circumferential groove 30 located on each outer side in the axial direction is a shoulder circumferential groove 30s. The circumferential groove 30 located inward of the shoulder circumferential groove 30s in the axial direction is a middle circumferential groove 30m. In the tire 2, the four circumferential grooves 30 include a pair of the middle circumferential grooves 30m and a pair of the shoulder circumferential grooves 30s.

In the tire 2, from the viewpoint of contribution to drainage performance and traction performance, the groove width of each middle circumferential groove 30m is preferably not less than 2% and not greater than 10% of the width WT of the tread 4. The groove depth of each middle circumferential groove 30m is preferably not less than 10 mm and not greater than 25 mm. The groove width of each shoulder circumferential groove 30s is preferably not less than 1% and not greater than 7% of the width WT of the tread 4. The groove depth of each shoulder circumferential groove 30s is preferably not less than 10 mm and not greater than 25 mm.

Each sidewall 6 is connected to an end of the tread 4. The sidewall 6 is located inward of the tread 4 in the radial direction. The sidewall 6 is formed from a crosslinked rubber. The sidewall 6 protects the carcass 12.

Each chafer 8 is located inward of the sidewall 6 in the radial direction. The chafer 8 comes into contact with the rim R. The chafer 8 is formed from a crosslinked rubber for which wear resistance is taken into consideration.

Each bead 10 is located inward of the chafer 8 in the axial direction. The bead 10 is located inward of the sidewall 6 in the radial direction. The bead 10 includes a core 32 and an apex 34.

The core 32 extends in the circumferential direction. The core 32 includes a wound wire made of steel. The core 32 has a substantially hexagonal cross-sectional shape.

The apex 34 is located radially outward of the core 32. The apex 34 includes an inner apex 34u and an outer apex 34s. The inner apex 34u extends radially outward from the core 32. The outer apex 34s is located radially outward of the inner apex 34u. The inner apex 34u is formed from a hard crosslinked rubber. The outer apex 34s is formed from a crosslinked rubber that is more flexible than the inner apex 34u.

The carcass 12 is located inward of the tread 4, the pair of sidewalls 6, and the pair of chafers 8. The carcass 12 extends on and between one bead 10 and the other bead 10. The carcass 12 includes at least one carcass ply 36. The carcass 12 of the tire 2 is composed of one carcass ply 36.

The carcass ply 36 is turned up around each core 32 from the inner side toward the outer side in the axial direction. The carcass ply 36 has a ply body 36a which extends from one core 32 to the other core 32, and a pair of turned-up portions 36b which are connected to the ply body 36a and turned up around the respective cores 32 from the inner side toward the outer side in the axial direction. An end of each turned-up portion 36b of the tire 2 is located at the same position as that of a conventional tire.

The carcass ply 36 includes a large number of carcass cords aligned with each other, which are not shown. These carcass cords are covered with a topping rubber. Each carcass cord intersects the equator plane CL. An angle of the carcass cords relative to the equator plane CL is not less than 70° and not greater than 90°. The carcass 12 has a radial structure. Steel cords are used as the carcass cords.

Each cushion layer 14 is located between the reinforcing layer 26 and the carcass 12 at an end of the reinforcing layer 26. The cushion layer 14 is formed from a flexible crosslinked rubber.

The inner liner 16 is located inward of the carcass 12. The inner liner 16 forms an inner surface of the tire 2. The inner liner 16 is formed from a crosslinked rubber that has a low gas permeability coefficient. The inner liner 16 maintains the internal pressure of the tire 2.

The insulation 18 is located between the carcass 12 and the inner liner 16. The insulation 18 is joined to the carcass 12 and is joined to the inner liner 16. In other words, the inner liner 16 is joined to the carcass 12 via the insulation 18. The insulation 18 is formed from a crosslinked rubber for which adhesiveness is taken into consideration.

Each steel filler 20 is located at a bead 10 portion (that is, a bead portion). The steel filler 20 is turned up around the core 32 from the inner side toward the outer side in the axial direction along the carcass ply 36.

In the tire 2, one end (hereinafter, inner end) of the steel filler 20 is located between the outer end of the inner apex 34u and the core 32 in the radial direction. The other end (hereinafter, outer end) of the steel filler 20 is located between the end of the turned-up portion 36b and the core 32 in the radial direction. In the radial direction, the outer end of the steel filler 20 is located inward of the inner end thereof.

The steel filler 20 includes a large number of filler cords aligned with each other, which are not shown. In the steel filler 20, the filler cords are covered with a topping rubber. Steel cords are used as the filler cords.

Each interlayer strip 22 is located between the outer apex 34s of the bead 10 and the chafer 8. The interlayer strip 22 covers the end of the turned-up portion 36b and the outer end of the steel filler 20. The interlayer strip 22 is formed from a crosslinked rubber.

Each edge strip 24 is located between the outer apex 34s of the bead 10 and the interlayer strip 22. The end of the turned-up portion 36b is interposed between the edge strip 24 and the interlayer strip 22. The edge strip 24 is formed from a crosslinked rubber. The material of the edge strip 24 of the tire 2 is the same as the material of the interlayer strip 22.

The reinforcing layer 26 is located inward of the tread 4 in the radial direction. The reinforcing layer 26 is located between the carcass 12 and the tread 4. The reinforcing layer 26 includes a belt 38 and a band 40.

The belt 38 includes a plurality of belt plies 42 aligned in the radial direction. Each belt ply 42 is disposed such that both ends thereof are opposed to each other across the equator plane CL. The belt 38 of the tire 2 includes three belt plies 42. Among the three belt plies 42, the belt ply 42 located on the inner side in the radial direction is a first belt ply 42A. The belt ply 42 located outward of the first belt ply 42A is a second belt ply 42B. The belt ply 42 located outward of the second belt ply 42B is a third belt ply 42C. The belt 38 includes the first belt ply 42A, the second belt ply 42B, and the third belt ply 42C. The belt 38 is composed of the three belt plies 42. The belt 38 may be composed of two belt plies 42.

As shown in FIG. 1, an end 42Ae of the first belt ply 42A is located outward of the shoulder circumferential groove 30s in the axial direction. An end 42Be of the second belt ply 42B is located outward of the shoulder circumferential groove 30s in the axial direction. An end 42Ce of the third belt ply 42C is located outward of the shoulder circumferential groove 30s in the axial direction.

In FIG. 1, a length indicated by reference sign W1 is the width in the axial direction of the first belt ply 42A. A length indicated by reference sign W2 is the width in the axial direction of the second belt ply 42B. A length indicated by reference sign W3 is the width in the axial direction of the third belt ply 42C. The width in the axial direction of each belt ply 42 is the distance in the axial direction from one end 42e of the belt ply 42 to the other end 42e of the belt ply 42.

In the tire 2, the second belt ply 42B has the largest width W2 in the axial direction. The first belt ply 42A has the width W1 in the axial direction equal to the width W3 in the axial direction of the third belt ply 42C. The width W1 in the axial direction of the first belt ply 42A may be larger than the width W3 in the axial direction of the third belt ply 42C. The width W1 in the axial direction of the first belt ply 42A may be smaller than the width W3 in the axial direction of the third belt ply 42C.

In the tire 2, from the viewpoint of ensuring the stiffness of the tread portion, the ratio (W1/WT) of the width W1 in the axial direction of the first belt ply 42A to the width WT of the tread 4 is preferably not less than 0.80 and preferably not greater than 0.90. The ratio (W2/WT) of the width W2 in the axial direction of the second belt ply 42B to the width WT of the tread 4 is preferably not less than 0.85 and preferably not greater than 0.95. The ratio (W3/WT) of the width W3 in the axial direction of the third belt ply 42C to the width WT of the tread 4 is preferably not less than 0.80 and preferably not greater than 0.90.

An end 38e of the belt 38 of the tire 2 is represented as an end 42e of the belt ply 42 having the largest width in the axial direction among the plurality of belt plies 42 included in the belt 38. As described above, in the tire 2, the second belt ply 42B has the largest width in the axial direction. The end 38e of the belt 38 of the tire 2 is represented as the end 42Be of the second belt ply 42B. In the tire 2, the end 38e of the belt 38 is also an end 26e of the reinforcing layer 26.

The band 40 includes a full band 44 and a pair of edge bands 46. As shown in FIG. 1, the full band 44 has ends 44e opposed to each other across the equator plane CL. The pair of edge bands 46 are disposed so as to be spaced apart from each other in the axial direction with the equator plane CL therebetween.

In the tire 2, each edge band 46 is located between the tread 4 and the full band 44. The edge band 46 is located outward of the end 44e of the full band 44 in the radial direction. In the axial direction, an inner end 46ue of the edge band 46 is located inward of the end 44e of the full band 44. In the tire 2, the position of the outer end 46se of the edge band 46 coincides with the position of the end 44e of the full band 44 in the axial direction. In the axial direction, an outer end 46se of the edge band 46 may be located outward of the end 44e of the full band 44. The edge band 46 overlaps the end 44e of the full band 44 in the radial direction. In the axial direction, the outer end 46se of the edge band 46 is located inward of the end 38e of the belt 38. In the axial direction, the outer end 46se of the edge band 46 of the tire 2 is located inward of the end 42Ce of the third belt ply 42C.

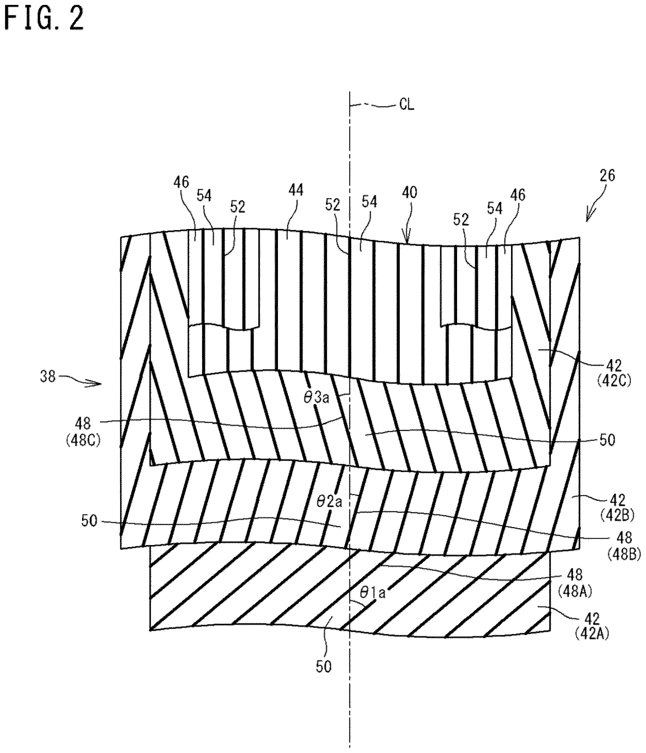

FIG. 2 shows the configuration of the reinforcing layer 26. In FIG. 2, the right-left direction is the axial direction of the tire 2, and the up-down direction is the circumferential direction of the tire 2. The direction perpendicular to the surface of the drawing sheet of FIG. 2 is the radial direction of the tire 2. The front side of the drawing sheet of FIG. 2 is the outer side in the radial direction, and the back side of this drawing sheet is the inner side in the radial direction.

As shown in FIG. 2, each belt ply 42 included in the belt 38 includes a large number of belt cords 48 aligned with each other. In FIG. 2, for convenience of description, the belt cords 48 are represented by solid lines, but the belt cords 48 are covered with a topping rubber 50. The belt cords 48 of the tire 2 are steel cords. In the tire 2, the density of the belt cords 48 in each belt ply 42 is not less than 15 ends/5 cm and not greater than 30 ends/5 cm.

The belt cords 48 in each belt ply 42 are tilted relative to the circumferential direction. The direction in which the belt cords 48 included in the first belt ply 42A are tilted (hereinafter, the tilt direction of first belt cords 48A) is the same as the direction in which the belt cords 48 included in the second belt ply 42B are tilted (hereinafter, the tilt direction of second belt cords 48B). The tilt direction of the first belt cords 48A may be opposite to the tilt direction of the second belt cords 48B. The tilt direction of second belt cords 48B is opposite to the direction in which the belt cords 48 included in the third belt ply 42C are tilted (hereinafter, the tilt direction of third belt cords 48C).

In FIG. 2, an angle θ1a is an angle (hereinafter, first tilt angle θ1a) of the first belt cords 48A relative to the equator plane CL. An angle θ2a is an angle (hereinafter, second tilt angle θ2a) of the second belt cords 48B relative to the equator plane CL. An angle θ3a is an angle (hereinafter, third tilt angle θ3a) of the third belt cords 48C relative to the equator plane CL.

In the tire 2, each of the first tilt angle θ1a, the second tilt angle θ2a, and the third tilt angle θ3a is preferably not less than 10° and preferably not greater than 60°. From the viewpoint of effectively restraining movement of the tire 2 and ensuring shape stability of the ground-contact surface, the first tilt angle θ1a is preferably not less than 40° and preferably not greater than 60°. The second tilt angle θ2a is preferably not less than 10° and preferably not greater than 20°. The third tilt angle θ3a is preferably not less than 10° and preferably not greater than 20°.

As shown in FIG. 2, the full band 44 and the pair of edge bands 46 included in the band 40 each include a spirally wound band cord 52. In FIG. 2, for the convenience of description, the band cords 52 are represented by solid lines, but each band cord 52 is covered with a topping rubber 54.

In the tire 2, the band cords 52 are steel cords or cords formed from an organic fiber (hereinafter, organic fiber cords). In the case where organic fiber cords are used as the band cords 52, examples of the organic fiber include nylon fibers, polyester fibers, rayon fibers, and aramid fibers. In the tire 2, as the band cord 52 of the full band 44 and the band cords 52 of the edge bands 46, the same cord may be used, or different cords may be used. The band cords 52 used for the full band 44 and the edge bands 46 are determined according to the specifications of the tire 2.

As described above, the full band 44 includes the spirally wound band cord 52. The full band 44 has a jointless structure. In the full band 44, an angle of the band cord 52 relative to the circumferential direction is preferably not greater than 5° and more preferably not greater than 2°. The band cord 52 of the full band 44 extends substantially in the circumferential direction.

The density of the band cord 52 in the full band 44 is not less than 20 ends/5 cm and not greater than 35 ends/5 cm. The density of the band cord 52 in the full band 44 is represented as the number of cross-sections of the band cord 52 included per 5 cm width of the full band 44 in a cross-section of the full band 44 included in the meridian cross-section.

As described above, each edge band 46 includes the spirally wound band cord 52. The edge band 46 has a jointless structure. In the edge band 46, an angle of the band cord 52 relative to the circumferential direction is preferably not greater than 5° and more preferably not greater than 2°. The band cord 52 of the edge band 46 extends substantially in the circumferential direction.

The density of the band cord 52 in the edge band 46 is not less than 20 ends/5 cm and not greater than 35 ends/5 cm. The density of the band cord 52 in the edge band 46 is represented as the number of cross-sections of the band cord 52 included per 5 cm width of the edge band 46 in a cross-section of the edge band 46 included in the meridian cross-section.

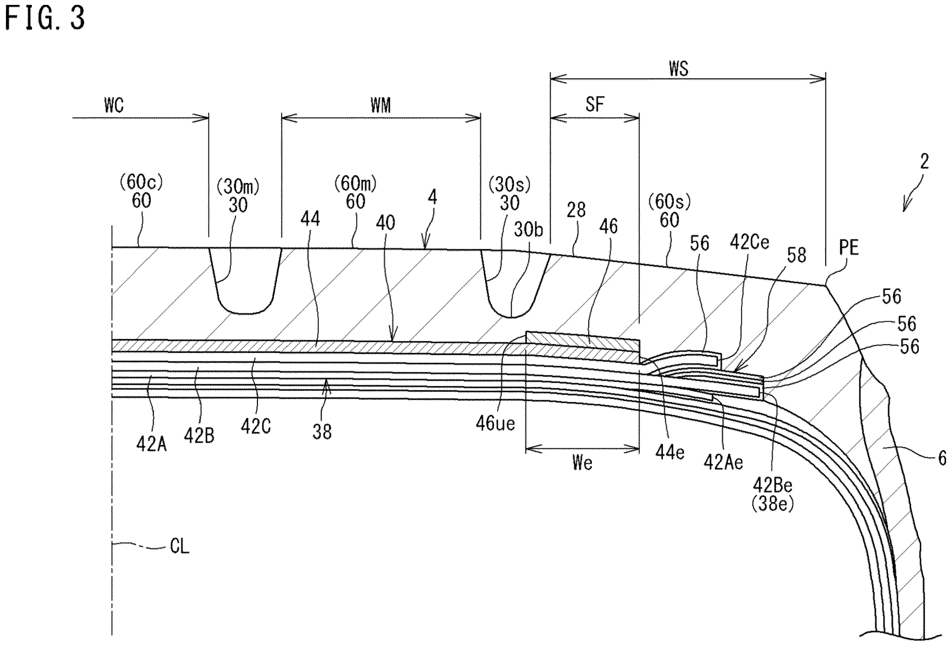

FIG. 3 shows a part of the cross-section of the tire 2 shown in FIG. 1. FIG. 3 shows the tread portion of the tire 2. In FIG. 3, the right-left direction is the axial direction of the tire 2, and the up-down direction is the radial direction of the tire 2. The direction perpendicular to the surface of the drawing sheet of FIG. 3 is the circumferential direction of the tire 2.

In the tire 2, each of the end 42Be of the second belt ply 42B and the end 42Ce of the third belt ply 42C is covered with a rubber layer 56. Two rubber layers 56 are further disposed between the end 42Be of the second belt ply 42B and the end 42Ce of the third belt ply 42C, each of which is covered with the rubber layer 56. In the tire 2, an edge member 58 including four rubber layers 56 in total is formed between the end 42Be of the second belt ply 42B and the end 42Ce of the third belt ply 42C. The edge member 58 is formed from a crosslinked rubber. The edge member 58 contributes to maintaining the interval between the end 42Be of the second belt ply 42B and the end 42Ce of the third belt ply 42C. In the tire 2, a change of the positional relationship between the end 42Be of the second belt ply 42B and the end 42Ce of the third belt ply 42C due to running is suppressed. The edge member 58 is a part of the reinforcing layer 26. The reinforcing layer 26 of the tire 2 includes a pair of edge members 58 in addition to the belt 38 and the band 40.

As described above, at least three circumferential grooves 30 are formed on the tread 4. Accordingly, at least four land portions 60 are formed in the tread 4. As shown in FIG. 1 and FIG. 3, in the tire 2, five land portions 60 are formed by forming four circumferential grooves 30 on the tread 4. In the present invention, the boundary between the outer surface of each land portion 60 and each circumferential groove 30 is represented as an end of the land portion 60. The end of the land portion 60 is also a reference point for the groove width of the circumferential groove 30 and defines the groove opening of the circumferential groove 30.

Among the five land portions 60 formed in the tread 4, the land portion 60 located on each outer side in the axial direction is a shoulder land portion 60s. The shoulder land portion 60s is located outward of the shoulder circumferential groove 30s in the axial direction and includes the end PE of the tread surface 28. In FIG. 3, a length indicated by reference sign WS is the width in the axial direction of the shoulder land portion 60s. The width WS in the axial direction is the distance in the axial direction from the inner end of the shoulder land portion 60s to the outer end of the shoulder land portion 60s (in other words, the end PE of the tread surface 28).

The land portion 60 located inward of the shoulder land portion 60s in the axial direction is a middle land portion 60m. The shoulder circumferential groove 30s is present between the middle land portion 60m and the shoulder land portion 60s. In FIG. 3, a length indicated by reference sign WM is the width in the axial direction of the middle land portion 60m. The width WM in the axial direction is the distance in the axial direction from the inner end of the middle land portion 60m to the outer end of the middle land portion 60m.

The land portion 60 located inward of the middle land portion 60m in the axial direction is a center land portion 60c. The middle circumferential groove 30m is present between the center land portion 60c and the middle land portion 60m. In the tire 2, the center land portion 60c is located on the equator plane CL. In FIG. 3, a length indicated by reference sign WC is the width in the axial direction of the center land portion 60c. The width WC in the axial direction is the distance in the axial direction from one end of the center land portion 60c to the other end of the center land portion 60c which is not shown.

In the tire 2, the five land portions 60 include the center land portion 60c, a pair of the middle land portions 60m, and a pair of the shoulder land portions 60s.

In the tire 2, the width WC in the axial direction of the center land portion 60c is not less than 10% and not greater than 18% of the width WT of the tread 4. The width WM in the axial direction of each middle land portion 60m is not less than 10% and not greater than 18% of the width WT of the tread 4. The width WS in the axial direction of each shoulder land portion 60s is not less than 15% and not greater than 25% of the width WT of the tread 4.

As described above, the full band 44 has the ends 44e opposed to each other across the equator plane CL. The full band 44 extends in the axial direction from the equator plane CL toward each end 44e.

In the tire 2, the full band 44 effectively restrains movement of the tread portion. A change of the shape of the tire 2, for example, a change of the contour (hereinafter, also referred to as case line) of the carcass 12, is suppressed, so that the ground-contact shape of the tire 2 is less likely to change.

Furthermore, in the tire 2, each edge band 46 is located outward of the end 44e of the full band 44 in the radial direction. The edge band 46 holds the end 44e of the full band 44. Fluctuation of the tension of the band cord 52 included in the full band 44 is suppressed, so that a break of the band cord 52 due to the fluctuation of the tension is less likely to occur. The full band 44 of the tire 2 can stably exhibit the function of suppressing a shape change. The edge band 46 is narrower than the full band 44. Therefore, tension fluctuation as in the full band 44 is less likely to occur in the band cord 52 of the edge band 46. A break is less likely to occur in the band cord 52 of the edge band 46.

In the tire 2, the full band 44 and the edge bands 46 suppress a shape change of the tire 2 due to running. The band 40 contributes to improvement of uneven wear resistance.

A large load acts on each bead portion of a tire. As described above, the tire 2 is a low-flatness tire. Each side portion of the tire 2 is shorter than each side portion of a high-flatness tire having a nominal aspect ratio greater than 65%. Each side portion of the tire 2 is likely to be influenced by strain generated in a bead portion thereof. In addition, the band 40 suppresses stretch of each side portion when the tire 2 expands. Each side portion of the tire 2 is in a situation where specific strain is likely to occur therein. In the tire 2, the band 40 is used in order to improve uneven wear resistance, but there is a concern that damage due to strain may occur in each side portion.

As shown in FIG. 1, in the tire 2 fitted on the rim R, the outer surface of each chafer 8 comes into contact with the rim R.

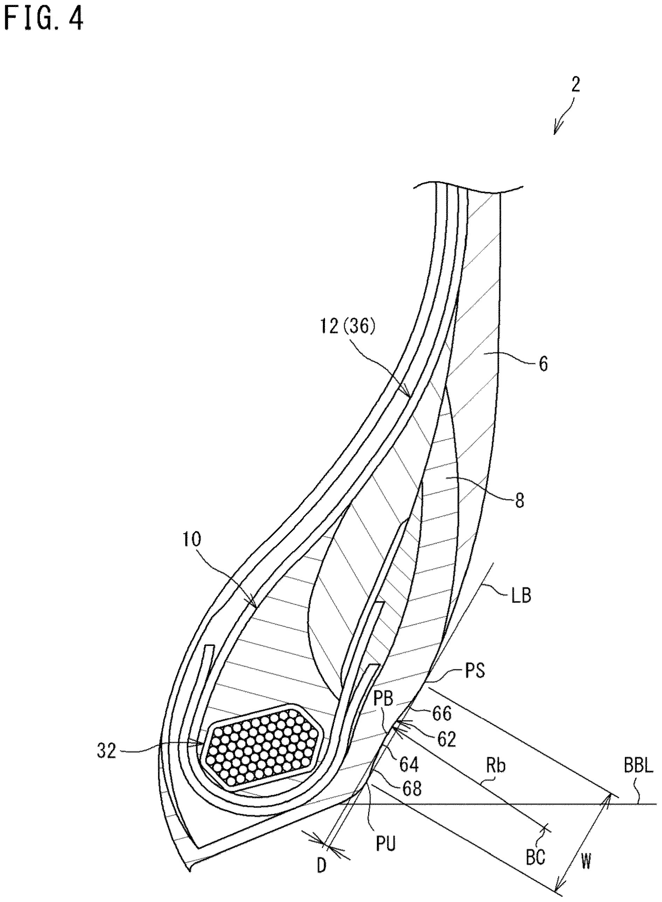

FIG. 4 shows a part of the cross-section of tire 2 shown in FIG. 1. FIG. 4 shows the bead portion of the tire 2. In FIG. 4, the right-left direction is the axial direction of the tire 2, and the up-down direction is the radial direction of the tire 2. The direction perpendicular to the surface of the drawing sheet of FIG. 4 is the circumferential direction of the tire 2. In FIG. 4, a solid line BBL extending in the axial direction is a bead base line. This bead base line is a line that defines the rim diameter (see JATMA or the like) of the rim R.

As shown in FIG. 4, in the tire 2, a recess 62 is provided on the outer surface of each chafer 8. The recess 62 extends in the circumferential direction. The recess 62 overlaps the core 32 of the bead 10 in the axial direction. As shown in FIG. 4, in the radial direction, the core 32 is located between a tangent point PS and a tangent point PU described later.

In FIG. 4, a solid line LB is a straight line that is tangent to the outer surface of the tire 2 on the radially outer side and the radially inner side of the recess 62. A position indicated by reference sign PS is the tangent point between the solid line LB and the outer surface of the tire 2 on the radially outer side of the recess 62. A position indicated by reference sign PU is the tangent point between the solid line LB and the outer surface of the tire 2 on the radially inner side of the recess 62. The solid line LB is a straight line that is tangent to the outer surface of the tire 2 at each of the tangent point PS and the tangent point PU. The portion between the tangent point PS and the tangent point PU is the recess 62, and the recess 62 is referred to as a fitting recess. The solid line LB is also referred to as a recess reference line.

The fitting recess 62 has a concave curved surface 64 whose contour in the meridian cross-section is an arc. In FIG. 4, a position indicated by reference sign BC is the center of the arc representing the contour of the concave curved surface 64. Reference sign Rb indicates the radius of this arc.

The fitting recess 62 further has an outer boundary portion 66 and an inner boundary portion 68. The outer boundary portion 66 connects the concave curved surface 64 and the tangent point PS on the radially outer side of the concave curved surface 64. In the meridian cross-section, the contour of the outer boundary portion 66 is represented by an arc, and this arc is tangent to the arc of the concave curved surface 64 at the boundary (not shown) between the concave curved surface 64 and the outer boundary portion 66. This arc is tangent to the contour line of the outer surface of the tire 2 at the tangent point PS. The inner boundary portion 68 connects the concave curved surface 64 and the tangent point PU on the radially inner side of the concave curved surface 64. In the meridian cross-section, the contour of the inner boundary portion 68 is represented by an arc, and this arc is tangent to the arc of the concave curved surface 64 at the boundary (not shown) between the concave curved surface 64 and the inner boundary portion 68. This arc is tangent to the contour line of the outer surface of the tire 2 at the tangent point PU.

In the tire 2, the outer surface of each chafer 8 has the fitting recess 62 extending in the circumferential direction. As shown in FIG. 1, when the tire 2 is fitted onto the rim R, the flange F of the rim R fits into the fitting recess 62.

In the tire 2, since the flange F fits into the fitting recess 62, the bead portion is less likely to move with respect to the rim R. Deformation of the bead portion is suppressed, so that strain generated in the bead portion is reduced. The reduction of the strain generated in the bead portion contributes to reduction of strain generated in the side portion. In the tire 2, the risk of occurrence of damage, caused by strain, in the side portion is reduced.

In the tire 2, even though the band 40 is provided, the required durability is ensured. As described above, the band 40 contributes to improvement of the uneven wear resistance of the tire 2. In the tire 2, the durability is ensured, and the uneven wear resistance is improved.

As described above, the fitting recess 62 of the tire 2 has the concave curved surface 64 whose contour in the meridian cross-section is an arc. In the tire 2, the radius Rb of the arc representing the contour of the concave curved surface 64 (hereinafter, the radius Rb of the concave curved surface 64) is preferably not less than 5.0 mm and not greater than 40.0 mm.

When the radius Rb is set to be not less than 5.0 mm, the flange F fits snugly into the fitting recess 62. In the tire 2, the bead portion is sufficiently held by the rim R, so that deformation of the bead portion is suppressed. Since the strain generated in the bead portion is reduced, the influence of the strain, generated in the bead portion, on the side portion is also reduced. In the tire 2, the durability is improved. From this viewpoint, the radius Rb is more preferably not less than 10.0 mm and further preferably not less than 15.0 mm.

When the radius Rb is set to be not greater than 40.0 mm, the flange F comes into sufficiently close contact with the fitting recess 62. Movement of the bead portion with respect to the flange F is suppressed, so that the strain generated in the side portion is reduced. In the tire 2, the durability is improved. From this viewpoint, the radius Rb is more preferably not greater than 35.0 mm and further preferably not greater than 30.0 mm.

In FIG. 4, reference sign PB indicates the position at which the length from the recess reference line LB to the fitting recess 62 is at its maximum, that is, the bottom of the fitting recess 62. A length indicated by a double-headed arrow D is the distance from the recess reference line LB to the bottom PB of the fitting recess 62. The length D is the depth of the fitting recess 62. A length indicated by a double-headed arrow W is the distance from the tangent point PS to the tangent point PU. The distance W is the width of the fitting recess 62.

In the tire 2, from the viewpoint that the flange F comes into sufficiently close contact with the fitting recess 62 and movement of the bead portion with respect to the flange F is effectively suppressed, the ratio (DAV) of the depth D of the fitting recess 62 to the width W of the fitting recess 62 is preferably not less than 0.05 and more preferably not less than 0.06. From the viewpoint that the flange F fits snugly into the fitting recess 62 and deformation of the bead portion is effectively suppressed, the ratio (DAV) is preferably not greater than 0.09 and more preferably not greater than 0.08.

From the viewpoint of reduction of the strain generated in the side portion, the depth D of the fitting recess 62 is preferably not less than 0.5 mm and preferably not greater than 3.0 mm

In the tire 2, the ratio (WT/WA) of the width WT of the tread 4 to the cross-sectional width WA is preferably not less than 0.60 and not greater than 0.90. When the ratio (WT/WA) is set to be not less than 0.60, the internal volume of the tire 2 is appropriately maintained. The band 40 effectively suppresses radial growth of the tire 2. Since the ground-contact shape of the tire 2 is less likely to change, good uneven wear resistance is achieved in the tire 2. From this viewpoint, the ratio (WT/WA) is more preferably not less than 0.75. When the ratio (WT/WA) is set to be not greater than 0.90, the holding force of the band 40 is appropriately maintained. Since damage caused due to concentration of strain on the side portion is prevented, the tire 2 has good durability. From this viewpoint, the ratio (WT/WA) is more preferably not greater than 0.85.

In FIG. 1, a length indicated by reference sign WB is the width of the band 40. The width WB of the band 40 is the distance in the axial direction from one end 40e of the band 40 to the other end 40e of the band 40. In the case where the outer end 46se of the edge band 46 is located outward of the end 44e of the full band 44 in the axial direction, the width WB of the band 40 is represented as the distance in the axial direction from the outer end 46se of one edge band 46 to the outer end 46se of the other edge band 46.

In the tire 2, the ratio (WB/WT) of the width WB of the band 40 to the width WT of the tread 4 is preferably not less than 0.60 and not greater than 0.90. When the ratio (WB/WT) is set to be not less than 0.60, the band 40 effectively suppresses radial growth of the tire 2. Since the ground-contact shape of the tire 2 is less likely to change, good uneven wear resistance is achieved in the tire 2. From this viewpoint, the ratio (WB/WT) is more preferably not less than 0.75. When the ratio (WB/WT) is set to be not greater than 0.90, the holding force of the band 40 is appropriately maintained. Since an increase in strain due to the holding by the band 40 is prevented, the risk of occurrence of damage in the side portion is reduced. The tire 2 has good durability. From this viewpoint, the ratio (WB/WT) is more preferably not greater than 0.85.

As described above, the full band 44 has the ends 44e opposed to each other across the equator plane CL. The full band 44 extends in the axial direction from the equator plane CL toward each end 44e. Each end 44e of the full band 44 is located outward of the shoulder circumferential groove 30s in the axial direction. The full band 44 is located inward of the shoulder circumferential groove 30s in the radial direction.

In the tire 2, the full band 44 effectively suppresses deformation near the shoulder circumferential groove 30s. Since a shape change of the tire 2 is suppressed, the ground-contact shape of the tire 2 is less likely to change. In the tire 2, occurrence of uneven wear is suppressed. From this viewpoint, each end 44e of the full band 44 is preferably located outward of the shoulder circumferential groove 30s in the axial direction.

In FIG. 3, a length indicated by reference sign SF is the distance in the axial direction from the shoulder circumferential groove 30s, that is, the inner end of the shoulder land portion 60s, to the end 44e of the full band 44.

In the tire 2, the ratio (SF/WS) of the distance SF in the axial direction from the shoulder circumferential groove 30s to the end 44e of the full band 44, to the width WS in the axial direction of the shoulder land portion 60s, is not greater than 50%. Accordingly, the end 44e of the full band 44 is located at an appropriate distance from the end of the tread 4 which moves actively in a running state. Since fluctuation of the tension of the band cord 52 is suppressed, occurrence of a break of the band cord 52 is suppressed in the tire 2. The full band 44 of the tire 2 contributes to suppression of a shape change. From this viewpoint, the ratio (SF/WS) is more preferably not greater than 35% and further preferably not greater than 25%.

When the ratio (SF/WS) is set to be not less than 10%, the end 44e of the full band 44 is located at an appropriate distance from the shoulder circumferential groove 30s, specifically, the bottom 30b of the shoulder circumferential groove 30s. In the tire 2, occurrence of damage starting from the bottom 30b of the shoulder circumferential groove 30s is suppressed. Since the width of the full band 44 is ensured, the full band 44 contributes to suppression of a shape change of the tire 2. From this viewpoint, the ratio (SF/WS) is more preferably not less than 15%.

In FIG. 3, a length indicated by reference sign We is the distance in the axial direction from the end 44e of the full band 44 to the inner end 46ue of the edge band 46.

In the tire 2, the distance We in the axial direction from the end 44e of the full band 44 to the inner end 46ue of the edge band 46 is preferably not less than 10 mm. Accordingly, the edge band 46 effectively holds the end 44e of the full band 44. Fluctuation of the tension of the band cord 52 included in the full band 44 is suppressed, so that occurrence of a break of the band cord 52 due to the fluctuation of the tension is suppressed. The full band 44 of the tire 2 can more stably exhibit the function of suppressing a shape change. From this viewpoint, the distance We in the axial direction is preferably not less than 20 mm.

In the tire 2, the position of the inner end 46ue of the edge band 46 is determined as appropriate in consideration of involvement in occurrence of damage starting from the bottom 30b of the shoulder circumferential groove 30s. Therefore, a preferable upper limit of the distance We in the axial direction is not set. From the viewpoint of effectively suppressing occurrence of damage starting from the bottom 30b of the shoulder circumferential groove 30s, in the axial direction, the inner end 46ue of the edge band 46 is preferably located outward of the bottom 30b of the shoulder circumferential groove 30s, and more preferably located further outward of the shoulder circumferential groove 30s. In the tire 2, in the axial direction, the inner end 46ue of the edge band 46 may be located inward of the bottom 30b of the shoulder circumferential groove 30s. In this case, in the axial direction, the inner end 46ue of the edge band 46 is more preferably located further inward of the shoulder circumferential groove 30s.

In the tire 2, each end 44e of the full band 44 is located inward of each end 38e of the belt 38 in the axial direction. The belt 38 is wider than the full band 44. The belt 38 holds each end 44e of the full band 44. The belt 38 contributes to suppression of fluctuation of the tension of the band cord 52 included in the full band 44. Occurrence of a break of the band cord 52 due to fluctuation of the tension is suppressed, so that the full band 44 can stably exhibit the function of suppressing a shape change. From this viewpoint, each end 44e of the full band 44 is preferably located inward of each end 38e of the belt 38 in the axial direction.

In the tire 2, the first belt ply 42A, the second belt ply 42B, and the third belt ply 42C which are included in the belt 38 have a width larger than the width of the full band 44. The belt 38 effectively holds each end 44e of the full band 44. The belt 38 contributes to suppression of fluctuation of the tension of the band cord 52 included in the full band 44. Occurrence of a break of the band cord 52 due to fluctuation of the tension is suppressed, so that the full band 44 can stably exhibit the function of suppressing a shape change. From this viewpoint, the first belt ply 42A, the second belt ply 42B, and the third belt ply 42C which are included in the belt 38 preferably have a width larger than the width of the full band 44.

A force acts on the full band 44 of the tire 2 so as to spread from the inner side toward the outer side in the radial direction. Due to this force, tension is generated in the band cord 52 of the full band 44. In the tire 2, the belt 38 is located radially inward of the full band 44.

In the tire 2, the belt 38 reduces the force acting on the full band 44, so that the tension of the band cord 52 included in the full band 44 is appropriately maintained. The belt 38 contributes to suppression of fluctuation of the tension of the band cord 52. Since the belt 38 is wider than the full band 44, fluctuation of the tension of the band cord 52 is effectively suppressed. In the tire 2, a break is less likely to occur in the band cord 52 of the full band 44. The full band 44 can stably exhibit the function of suppressing a shape change. From this viewpoint, in the tire 2, the belt 38 is preferably located inward of the full band 44 in the radial direction. More preferably, the belt 38 is located inward of the full band 44 in the radial direction, and the belt 38 has a width larger than the width of the full band 44.

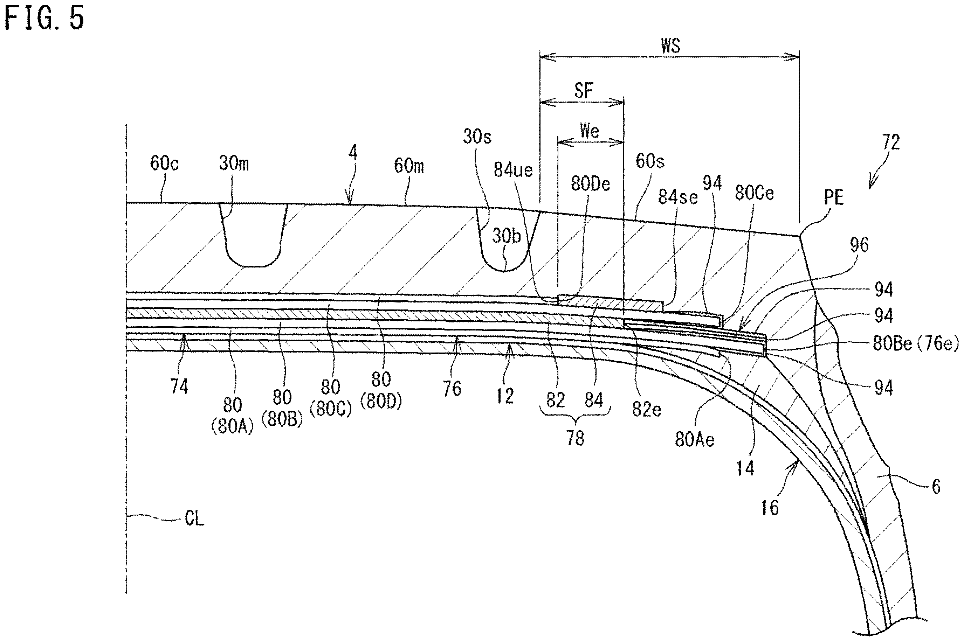

FIG. 5 shows a meridian cross-section of a heavy duty tire 72 (hereinafter, also referred to simply as "tire 72") according to another embodiment of the present invention. FIG. 5 shows a tread portion of the tire 72. In FIG. 5, the right-left direction is the axial direction of the tire 72, and the up-down direction is the radial direction of the tire 72. The direction perpendicular to the surface of the drawing sheet of FIG. 5 is the circumferential direction of the tire 72.

The tire 72 has the same configuration as the tire 2 shown in FIG. 1 except that the configuration of the reinforcing layer 26 of the tire 2 shown in FIG. 1 is different. Therefore, in FIG. 5, the same components as those of the tire 2 in FIG. 1 are designated by the same reference signs, and the description thereof is omitted.

In the tire 72 as well, a reinforcing layer 74 is located inward of the tread 4 in the radial direction. The reinforcing layer 74 is located between the carcass 12 and the tread 4. The reinforcing layer 74 includes a belt 76 and a band 78.

The belt 76 of the tire 72 includes four belt plies 80. The four belt plies 80 include a first belt ply 80A located on the inner side in the radial direction, a second belt ply 80B located outward of the first belt ply 80A in the radial direction, a third belt ply 80C located outward of the second belt ply 80B in the radial direction, and a fourth belt ply 80D located outward of the third belt ply 80C in the radial direction. As shown in FIG. 5, an end 80Ae of the first belt ply 80A, an end 80Be of the second belt ply 80B, an end 80Ce of the third belt ply 80C, and an end 80De of the fourth belt ply 80D are located outward of the shoulder circumferential groove 30s in the axial direction.

In the tire 72, the second belt ply 80B has the largest width in the axial direction, and the fourth belt ply 80D has the smallest width in the axial direction. The first belt ply 80A has a width in the axial direction equal to the width in the axial direction of the third belt ply 80C. The width in the axial direction of the first belt ply 80A may be larger than the width in the axial direction of the third belt ply 80C.

In the tire 72, from the viewpoint of ensuring the stiffness of the tread portion, the ratio of the width in the axial direction of the first belt ply 80A to the width WT of the tread 4 is preferably not less than 0.80 and preferably not greater than 0.90. The ratio (W2/WT) of the width W2 in the axial direction of the second belt ply 80B to the width WT of the tread 4 is preferably not less than 0.85 and preferably not greater than 0.95. The ratio (W3/WT) of the width W3 in the axial direction of the third belt ply 80C to the width WT of the tread 4 is preferably not less than 0.80 and preferably not greater than 0.90. The ratio (W4/WT) of a width W4 in the axial direction of the fourth belt ply 80D to the width WT of the tread 4 is preferably not less than 0.55 and preferably not greater than 0.65.

The band 78 includes a full band 82 and a pair of edge bands 84. The full band 82 has ends 82e opposed to each other across the equator plane CL. The pair of edge bands 84 are disposed so as to be spaced apart from each other in the axial direction with the equator plane CL therebetween. In the tire 72, the fourth belt ply 80D which forms a part of the belt 76 is located between the pair of edge bands 84.

In the tire 72, each edge band 84 is located between the tread 4 and the full band 82. The edge band 84 is located outward of the end 82e of the full band 82 in the radial direction. In the axial direction, an inner end 84ue of the edge band 84 is located inward of the end 82e of the full band 82. In the axial direction, an outer end 84se of the edge band 84 is located outward of the end 82e of the full band 82. The edge band 84 overlaps the end 82e of the full band 82 in the radial direction. In the axial direction, the outer end 84se of the edge band 84 is located inward of an end 76e of the belt 76. In the axial direction, the outer end 84se of the edge band 84 of the tire 72 is located inward of the end 80Ce of the third belt ply 80C.

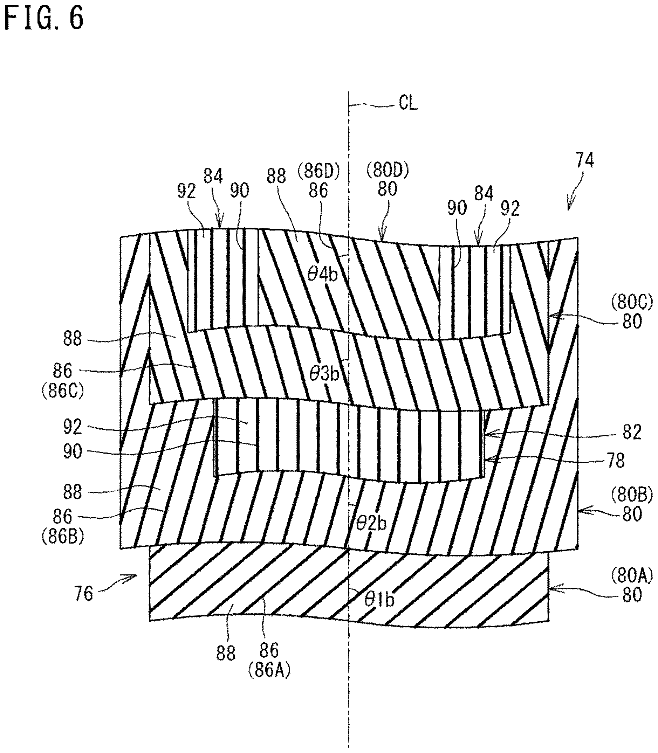

FIG. 6 shows the configuration of the reinforcing layer 74. In FIG. 6, the right-left direction is the axial direction of the tire 72, and the up-down direction is the circumferential direction of the tire 72. The direction perpendicular to the surface of the drawing sheet of FIG. 6 is the radial direction of the tire 72. The front side of the drawing sheet of FIG. 6 is the outer side in the radial direction. The back side of the drawing sheet of FIG. 6 is the inner side in the radial direction.

As shown in FIG. 6, each belt ply 80 included in the belt 76 includes a large number of belt cords 86 aligned with each other. The belt cords 86 are covered with a topping rubber 88. The belt cords 86 are steel cords. The density of the belt cords 86 in each belt ply 80 is not less than 15 ends/5 cm and not greater than 30 ends/5 cm.

The belt cords 86 in each belt ply 80 are tilted relative to the circumferential direction. The tilt direction of first belt cords 86A is the same as the tilt direction of second belt cords 86B. The tilt direction of the second belt cords 86B is opposite to the tilt direction of third belt cords 86C. The tilt direction of the third belt cords 86C is the same as the tilt direction of fourth belt cords 86D. The tilt direction of the first belt cords 86A may be opposite to the tilt direction of the second belt cords 86B, and the tilt direction of the fourth belt cords 86D may be opposite to the tilt direction of the third belt cords 86C. In the tire 72, from the viewpoint of obtaining a ground-contact surface whose shape change is suppressed, the tilt direction of the second belt cords 86B is preferably opposite to the tilt direction of the third belt cords 86C.

In FIG. 6, an angle θ1b is a tilt angle (hereinafter, first tilt angle θ1b) of the first belt cords 86A relative to the equator plane CL. An angle θ2b is a tilt angle (hereinafter, second tilt angle θ2b) of the second belt cords 86B relative to the equator plane CL. An angle θ3b is a tilt angle (hereinafter, third tilt angle 03b) of the third belt cords 86C relative to the equator plane CL. An angle θ4b is a tilt angle (hereinafter, fourth tilt angle θ4b) of the fourth belt cords 86D relative to the equator plane CL.

In the tire 72, each of the first tilt angle θ1b, the second tilt angle θ2b, the third tilt angle θ3b, and the fourth tilt angle θ4b is preferably not less than 10° and preferably not greater than 60°. From the viewpoint of effectively restraining movement of the tire 72 and ensuring shape stability of the ground-contact surface, the first tilt angle θ1b is preferably not less than 40° and preferably not greater than 60°. The second tilt angle θ2b is preferably not less than 10° and preferably not greater than 20°. The third tilt angle θ3b is preferably not less than 10° and preferably not greater than 20°. The fourth tilt angle θ4b is preferably not less than 10° and preferably not greater than 60°.

As shown in FIG. 6, the full band 82 and the pair of edge bands 84 included in the band 78 each include a spirally wound band cord 90. The band cord 90 is covered with a topping rubber 92.

In the tire 72, the band cords 90 are steel cords or organic fiber cords. In the case where organic fiber cords are used as the band cords 90, examples of the organic fiber include nylon fibers, polyester fibers, rayon fibers, and aramid fibers.

The band cord 90 of the full band 82 extends substantially in the circumferential direction. The density of the band cord 90 in the full band 82 is not less than 20 ends/5 cm and not greater than 35 ends/5 cm. The band cord 90 of the edge band 84 extends substantially in the circumferential direction. The density of the band cord 90 in the edge band 84 is not less than 20 ends/5 cm and not greater than 35 ends/5 cm.

In the tire 72 as well, as shown in FIG. 5, each of the end 80Be of the second belt ply 80B and the end 80Ce of the third belt ply 80C is covered with a rubber layer 94. Two rubber layers 94 are further disposed between the end 80Be of the second belt ply 80B and the end 80Ce of the third belt ply 80C, each of which is covered with the rubber layer 94. In the tire 72, an edge member 96 including four rubber layers 94 in total is formed between the end 80Be of the second belt ply 80B and the end 80Ce of the third belt ply 80C. The edge member 96 is formed from a crosslinked rubber. The edge member 96 contributes to maintaining the interval between the end 80Be of the second belt ply 80B and the end 80Ce of the third belt ply 80C. In the tire 72, a change of the positional relationship between the end 80Be of the second belt ply 80B and the end 80Ce of the third belt ply 80C due to running is suppressed.

As described above, the full band 82 has the ends 82e opposed to each other across the equator plane CL. The full band 82 extends in the axial direction from the equator plane CL toward each end 82e.

In the tire 72, the full band 82 effectively restrains movement of the tread portion. A change of a case line is suppressed, so that the ground-contact shape is less likely to change.

Furthermore, in the tire 72, each edge band 84 located outward of the end 82e of the full band 82 in the radial direction holds the end 82e of the full band 82. Fluctuation of the tension of the band cord 90 included in the full band 82 is suppressed, so that a break of the band cord 90 due to the fluctuation of the tension is less likely to occur. The full band 82 of the tire 72 can stably exhibit the function of suppressing a shape change.

In the tire 72, the full band 82 and the edge bands 84 suppress a shape change of the tire 72 due to running. The band 78 contributes to improvement of uneven wear resistance.

Although not shown, in the tire 72 as well, the outer surface of each chafer 8 has a fitting recess 62 extending in the circumferential direction. When the tire 72 is fitted onto the rim R, the flange F fits into the fitting recess 62.

In the tire 72, since the flange F fits into the fitting recess 62, the bead portion is less likely to move with respect to the rim R. Deformation of the bead portion is suppressed, so that strain generated in the bead portion is reduced. The reduction of the strain generated in the bead portion contributes to reduction of strain generated in the side portion. In the tire 72 as well, the risk of occurrence of damage, caused by strain, in the side portion is reduced.

In the tire 72, even though the band 78 is provided, the required durability is ensured. As described above, the band 78 contributes to improvement of the uneven wear resistance of the tire 72. In the tire 72, the durability is ensured, and the uneven wear resistance is improved.

As described above, the full band 82 has the ends 82e opposed to each other across the equator plane CL. The full band 82 extends in the axial direction from the equator plane CL toward each end 82e. Each end 82e of the full band 82 is located outward of the shoulder circumferential groove 30s in the axial direction. The full band 82 is located inward of the shoulder circumferential groove 30s in the radial direction.

In the tire 72, the full band 82 effectively suppresses deformation near the shoulder circumferential groove 30s. Since a shape change of the tire 72 is suppressed, the ground-contact shape of the tire 72 is less likely to change. In the tire 72, occurrence of uneven wear is suppressed. From this viewpoint, each end 82e of the full band 82 is preferably located outward of the shoulder circumferential groove 30s in the axial direction.

In FIG. 5, a length indicated by reference sign SF is the distance in the axial direction from the shoulder circumferential groove 30s to the end 82e of the full band 82.

In the tire 72, the ratio (SF/WS) of the distance SF in the axial direction from the shoulder circumferential groove 30s to the end 82e of the full band 82, to the width WS in the axial direction of the shoulder land portion 60s, is preferably not greater than 50%. Accordingly, the end 82e of the full band 82 is located at an appropriate distance from the end of the tread 4 which moves actively in a running state. Since fluctuation of the tension of the band cord 90 is suppressed, occurrence of a break of the band cord 90 is suppressed in the tire 72. The full band 82 of the tire 72 contributes to suppression of a shape change. From this viewpoint, the ratio (SF/WS) is more preferably not greater than 35% and further preferably not greater than 25%.

When the ratio (SF/WS) is set to be not less than 10%, the end 82e of the full band 82 is located at an appropriate distance from the shoulder circumferential groove 30s, specifically, the bottom 30b of the shoulder circumferential groove 30s. In the tire 72, occurrence of damage starting from the bottom 30b of the shoulder circumferential groove 30s is suppressed. Since the width of the full band 82 is ensured, the full band 82 contributes to suppression of a shape change of the tire 72. From this viewpoint, the ratio (SF/WS) is more preferably not less than 15%.

In FIG. 5, a length indicated by reference sign We is the distance in the axial direction from the end 82e of the full band 82 to the inner end 84ue of the edge band 84.

In the tire 72, the distance We in the axial direction from the end 82e of the full band 82 to the inner end 84ue of the edge band 84 is preferably not less than 10 mm. Accordingly, the edge band 84 effectively holds the end 82e of the full band 82. Fluctuation of the tension of the band cord 90 included in the full band 82 is suppressed, so that occurrence of a break of the band cord 90 due to the fluctuation of the tension is suppressed. The full band 82 of the tire 72 can more stably exhibit the function of suppressing a shape change. From this viewpoint, the distance We in the axial direction is preferably not less than 20 mm.

In the tire 72, the position of the inner end 84ue of the edge band 84 is determined as appropriate in consideration of involvement in occurrence of damage starting from the bottom 30b of the shoulder circumferential groove 30s. Therefore, a preferable upper limit of the distance We in the axial direction is not set. From the viewpoint of effectively suppressing occurrence of damage starting from the bottom 30b of the shoulder circumferential groove 30s, in the axial direction, the inner end 84ue of the edge band 84 is preferably located outward of the bottom 30b of the shoulder circumferential groove 30s, and more preferably located further outward of the shoulder circumferential groove 30s. In the tire 72, in the axial direction, the inner end 84ue of the edge band 84 may be located inward of the bottom 30b of the shoulder circumferential groove 30s. In this case, in the axial direction, the inner end 84ue of the edge band 84 is more preferably located further inward of the shoulder circumferential groove 30s.

In the tire 72, each end 82e of the full band 82 is located inward of the end 76e of the belt 76 in the axial direction. The belt 76 is wider than the full band 82. The belt 76 holds each end 82e of the full band 82. The belt 76 contributes to suppression of fluctuation of the tension of the band cord 90 included in the full band 82. Occurrence of a break of the band cord 90 due to fluctuation of the tension is suppressed, so that the full band 82 can stably exhibit the function of suppressing a shape change. From this viewpoint, the end 82e of the full band 82 is preferably located inward of the end 76e of the belt 76 in the axial direction.

In the tire 72, the second belt ply 80B is located radially inward of the full band 82. The second belt ply 80B reduces the force acting on the full band 82, so that the tension of the band cord 90 included in the full band 82 is appropriately maintained. The second belt ply 80B contributes to suppression of fluctuation of the tension of the band cord 90. Since the second belt ply 80B is wider than the full band 82, fluctuation of the tension of the band cord 90 is effectively suppressed. In the tire 72, a break is less likely to occur in the band cord 90 of the full band 82. The full band 82 can stably exhibit the function of suppressing a shape change. From this viewpoint, at least one belt ply 80 of the plurality of belt plies 80 included in the belt 76 is preferably located inward of the full band 82 in the radial direction. The at least one belt ply 80 located inward of the full band 82 more preferably has a width larger than the width of the full band 82.

In the tire 72, the first belt ply 80A and the second belt ply 80B are located inward of the full band 82 in the radial direction. The first belt ply 80A and the second belt ply 80B contribute to suppression of fluctuation of the tension of the band cord 90. Since the first belt ply 80A and the second belt ply 80B are wider than the full band 82, fluctuation of the tension of the band cord 90 is more effectively suppressed. In the tire 72, a break is less likely to occur in the band cord 90 of the full band 82. The full band 82 can stably exhibit the function of suppressing a shape change. From this viewpoint, at least two belt plies 80 of the plurality of belt plies 80 included in the belt 76 are more preferably located inward of the full band 82 in the radial direction. The at least two belt plies 80 located inward of the full band 82 further preferably have a width larger than the width of the full band 82.

In the tire 72, in the radial direction, the second belt ply 80B is located inward of the full band 82, and the third belt ply 80C is located outward of the full band 82. In the tire 72, the full band 82 is interposed between the second belt ply 80B and the third belt ply 80C. As described above, the second belt ply 80B is wider than the full band 82. The third belt ply 80C is also wider than the full band 82. The plurality of belt plies 80 included in the belt 76 of the tire 72 include two belt plies 80 having a width larger than the width of the full band 82, and the full band 82 is interposed between the two belt plies 80 having a large width. In the tire 72, fluctuation of the tension of the band cord 90 included in the full band 82 is more effectively suppressed, so that a break is less likely to occur in the band cord 90 of the full band 82. The full band 82 of the tire 72 can stably exhibit the function of suppressing a shape change. From this viewpoint, in the tire 72, preferably, the plurality of belt plies 80 included in the belt 76 include two belt plies 80 having a width larger than the width of the full band 82, and the full band 82 is interposed between the two belt plies 80 having a large width.

In the tire 72, the first belt ply 80A, the second belt ply 80B, and the third belt ply 80C have a width larger than the width of the full band 82. In the radial direction, the first belt ply 80A and the second belt ply 80B are located inward of the full band 82, and the third belt ply 80C is located outward of the full band 82. The pair of edge bands 84 are located outward of the third belt ply 80C in the radial direction. As described above, each edge band 84 is located outward of the end 82e of the full band 82 in the radial direction. The edge band 84 overlaps the end 82e of the full band 82 via the third belt ply 80C in the radial direction.

In the tire 72, the full band 82 can stably exhibit the function of suppressing a shape change, and improvement of uneven wear resistance is achieved. From this viewpoint, preferably, in the tire 72, the plurality of belt plies 80 included in the belt 76 include the first belt ply 80A located on the inner side in the radial direction, the second belt ply 80B located outward of the first belt ply 80A in the radial direction, and the third belt ply 80C located outward of the second belt ply 80B in the radial direction, the first belt ply 80A, the second belt ply 80B, and the third belt ply 80C have a width larger than the width of the full band 82, the first belt ply 80A and the second belt ply 80B are located inward of the full band 82 in the radial direction, the third belt ply 80C is located outward of the full band 82 in the radial direction, and each edge band 84 located outward of the full band 82 overlaps the end 82e of the full band 82 via the third belt ply 80C in the radial direction.

As is obvious from the above description, according to the present invention, a heavy duty tire that can ensure durability and improve uneven wear resistance is obtained. The present invention exhibits a remarkable effect in a low-flatness heavy duty tire having a nominal aspect ratio of 65% or less.

### EXAMPLES

The following will describe the present invention in further detail by means of examples, etc., but the present invention is not limited to the examples, but can be modified within the scope of the appended claims.

### [Example 1]

A heavy duty pneumatic tire (tire size = 355/50R22.5) having the basic structure shown in FIG. 1 and having specifications shown in Table 1 below was obtained.

The reinforcing layer of Example 1 has the configuration shown in FIG. 3. The fact that each end of the full band is located outward of the shoulder circumferential groove in the axial direction is represented as "OUT" in the cell for "full band end" in Table 1 below. The fact that the band has edge bands is represented as "Y" in the cell for "edge band" in Table 1.

In Example 1, the ratio (WT/WA) of the width WT of the tread to the cross-sectional width WA was 0.80. The ratio (WB/WT) of the width WB of the band to the width WT of the tread was 0.80. The radius Rb of the arc representing the contour of the concave curved surface of the fitting recess provided on the outer surface of each chafer was 28 mm.

In Example 1, the distance We in the axial direction from the end of the full band to the inner end of the edge band was 25 mm. The ratio (SF/WS) of the distance SF in the axial direction from the shoulder circumferential groove to the end of the full band, to the width WS in the axial direction of the shoulder land portion, was 15%.

### [Comparative Example 1]

A tire of Comparative Example 1 was obtained in the same manner as Example 1, except that no edge band and no fitting recess were provided and each end of the full band was located inward of the shoulder circumferential groove in the axial direction.

### [Comparative Example 2]

A tire of Comparative Example 2 was obtained in the same manner as Example 1, except that no edge band and no fitting recess were provided.

### [Comparative Example 3]

A tire of Comparative Example 3 was obtained in the same manner as Example 1, except that no fitting recess was provided.

### [Examples 2 and 3]

Tires of Examples 2 and 3 were obtained in the same manner as Example 1, except that the width WT of the tread was changed such that the ratio (WT/WA) was set as shown in Tables 1 and 2 below.

### [Example 4]

A tire of Example 4 was obtained in the same manner as Example 1, except that the width WT of the tread and the width WB of the band were changed such that the ratio (WT/WA) and the ratio (WB/WT) were set as shown in Table 2 below.

### [Examples 5 and 6]

Tires of Examples 5 and 6 were obtained in the same manner as Example 1, except that the radius Rb of the concave curved surface was set as shown in Table 2 below.

In Examples 5 and 6, the position of the bottom PB of the fitting recess and the depth D of the fitting recess were set in the same manner as Example 1.

### [Example 7]

A tire of Example 7 was obtained in the same manner as Example 1, except that a reinforcing layer having the configuration shown in FIG. 5 was used.

In Example 7, similar to Example 1, the distance We in the axial direction from the end of the full band to the inner end of the edge band was 25 mm. The ratio (SF/WS) of the distance SF in the axial direction from the shoulder circumferential groove to the end of the full band, to the width WS in the axial direction of the shoulder land portion, was 15%.

### [Profile Change]

A test tire was fitted onto a rim (11.75×22.5) and inflated with air to adjust the internal pressure of the tire to a normal internal pressure. The tire was caused to run on a drum tester at a speed of 80 km/h for 1000 km, and a profile of the case line on the inner side of the shoulder circumferential groove was obtained. The profile of the case line was compared with the profile of the case line before running to confirm a change in profile before and after running. The results are represented as indexes according to the following ratings in Tables 1 and 2 below. A higher value represents that a change in profile is reduced. In the running test, a normal load was applied to the tire.

| Change amount | Index |
|---|---|
| 0.0 mm to 0.5 mm | 100 |
| 0.6 mm to 1.0 mm | 95 |
| 1.1 mm to 1.5 mm | 90 |
| 1.6 mm to 2.0 mm | 85 |
| 2.1 mm to 2.5 mm | 80 |

### [Side Portion Surface Strain]

The strain generated on the surface of a side portion when a tire expanded was measured. The tire was fitted onto a rim (11.75×22.5) and inflated with air to adjust the internal pressure of the tire to 5% of a normal internal pressure. Accordingly, the state of the tire was adjusted to a reference state. The tire in the reference state was further inflated with air to adjust the internal pressure of the tire to the normal internal pressure to expand the tire. Accordingly, the state of the tire was adjusted to a normal state. The peak value of the strain in the radial direction generated on the surface of the side portion was measured in the process of adjusting the state of the tire from the reference state to the normal state. The result is represented as an index with the result of Example 1 being regarded as 100, in Tables 1 and 2 below. A higher value represents that the strain generated on the surface of the side portion is smaller.

**[Table 1]**

| | Comparative Example 1 | Comparative Example 2 | Comparative Example 3 | Example 1 | Example 2 |
|---|---|---|---|---|---|
| Configuration | - | - | FIG. 3 | FIG. 3 | FIG. 3 |
| Full band end | IN | OUT | OUT | OUT | OUT |
| Edge band | N | N | Y | Y | Y |
| WT/WA [-] | 0.80 | 0.80 | 0.80 | 0.80 | 0.85 |
| WB/WT [-] | 0.50 | 0.80 | 0.80 | 0.80 | 0.80 |
| Rb [mm] | - | - | - | 28 | 28 |
| Profile change | 85 | 90 | 95 | 100 | 100 |
| Side portion surface strain | 90 | 95 | 90 | 100 | 100 |

**[Table 2]**

| | Example 3 | Example 4 | Example 5 | Example 6 | Example 7 |
|---|---|---|---|---|---|
| Configuration | FIG. 3 | FIG. 3 | FIG. 3 | FIG. 3 | FIG. 5 |
| Full band end | OUT | OUT | OUT | OUT | OUT |
| Edge band | Y | Y | Y | Y | Y |
| WT/WA [-] | 0.90 | 0.85 | 0.85 | 0.85 | 0.80 |
| WB/WT [-] | 0.80 | 0.70 | 0.80 | 0.80 | 0.80 |
| Rb [mm] | 28 | 28 | 10 | 40 | 28 |
| Profile change | 100 | 100 | 100 | 100 | 100 |
| Side portion surface strain | 100 | 100 | 95 | 95 | 100 |

As shown in Tables 1 and 2, in the Examples, a profile change is suppressed, the strain generated in the side portion is reduced, durability is ensured, and uneven wear resistance is improved. From the evaluation results, advantages of the present invention are clear.

### INDUSTRIAL APPLICABILITY

The above-described technology for ensuring durability and improving uneven wear resistance can be applied to various tires.

### REFERENCE SIGNS LIST

2, 72 tire
4 tread
6 sidewall
8 chafer
10 bead
12 carcass
26, 74 reinforcing layer
28 tread surface
30, 30s, 30m circumferential groove
38, 76 belt
40, 78 band
42, 42A, 42B, 42C, 80, 80A, 80B, 80C, 80D belt ply
44, 82 full band
46, 84 edge band
48, 48A, 48B, 48C, 86, 86A, 86B, 86C, 86D belt cord
52, 90 band cord
60, 60s, 60m, 60c land portion
62 recess (fitting recess)
64 concave curved surface

## Claims

1. A heavy duty tire (2) having a nominal aspect ratio of 65% or less, the heavy duty tire (2) comprising:
a tread (4) that comes into contact with a road surface;
a pair of sidewalls (6) that are each connected to an end of the tread (4) and located inward of the tread (4) in a radial direction;
a pair of chafers (8) that are each located inward of the sidewall (6) in the radial direction and come into contact with a rim (R);
a pair of beads (10) that are each located inward of the chafer (8) in an axial direction; and
a band (40) that is located inward of the tread (4) in the radial direction and includes a spirally wound band cord, wherein
at least three circumferential grooves (30) are formed on the tread, whereby at least four land portions (60) are formed in the tread (4),
among the at least three circumferential grooves (30), a circumferential groove located on each outer side in an axial direction is a shoulder circumferential groove (30s),
a land portion located outward of the shoulder circumferential groove (30s) in the axial direction is a shoulder land portion (60s),
the band (40) includes a full band (44) having ends opposed to each other across an equator plane, and a pair of edge bands (46) located outward of the ends of the full band (44) in the radial direction, and
an outer surface of each chafer (8) has a fitting recess (62) into which a flange (F) of the rim (R) fits,
**characterized in that**
a ratio (SF/WS) of a distance (SF) in the axial direction from the shoulder circumferential groove (30s) to the end (44e) of the full band (44), to a width (WS) in the axial direction of the shoulder land portion (60s), is not less than 10% and not greater than 50%.

2. The heavy duty tire (2) according to claim 1, wherein
the fitting recess (62) has a concave curved surface (64) whose contour in a meridian cross-section of the tire (2) is an arc, and
the concave curved surface (64) has a radius (Rb) of not less than 5.0 mm and not greater than 40.0 mm.

3. The heavy duty tire (2) according to claim 1 or 2, wherein a ratio (WT/WA) of a width (WT) of the tread (4) to a cross-sectional width (WA) of the tire (2) is not less than 0.60 and not greater than 0.90.

4. The heavy duty tire (2) according to any one of claims 1 to 3, wherein a ratio of a width (WB) of the band (40) to a width (WT) of the tread (4) is not less than 0.60 and not greater than 0.90.

5. The heavy duty tire (2) according to any one of claims 1 to 4, wherein each end (44e) of the full band (44) is located outward of the shoulder circumferential groove (30s) in the axial direction.

6. The heavy duty tire (2) according to any one of claims 1 to 5, wherein a distance (We) in the axial direction from the end (44e) of the full band (44) to an inner end (46ue) of the edge band (46) is not less than 10 mm.

7. The heavy duty tire (2) according to any one of claims 1 to 6, further comprising a belt (38) including a large number of belt cords aligned with each other, wherein
the belt (38) includes three belt plies (42) being a first belt ply (42A), a second belt ply (42B), and a third belt ply (42C),
the belt ply located radially outward of the first belt ply (42A) is the second belt ply (42B),
the belt ply located radially outward of the second belt ply (42B) is the third belt ply (42C),
the second belt ply (42B) has a larger axial width than the first belt ply (42A) and the third belt ply (42C),
the edge band (46) is located radially outward of the third belt ply (42C), and
the outer end (46se) of the edge band (46) is located axially inward of the end of the third belt ply (42C).

8. The heavy duty tire (2) according to claim 7, wherein
the outer end (46se) of the edge band (46) is located axially inward of the end of the first belt ply (42A).

9. The heavy duty tire (2) according to claim 7 or 8, wherein
an inner end (46ue) of the edge band (46) is located axially outward of a bottom of the shoulder circumferential groove (30s).

10. The heavy duty tire (2) according to claim 7 or 8, wherein
an inner end (46ue) of the edge band (46) is located axially inward of a bottom of the shoulder circumferential groove (30s).

11. The heavy duty tire (2) according to any one of claims 1 to 10, wherein
a position of the outer end (46se) of the edge band (46) coincides with a position of the end (44e) of the full band (44) in the axial direction, or
the outer end (46se) of the edge band (46) is located axially outward of the end (44e) of the full band (44).

12. The heavy duty tire (2) according to any one of claims 7 to 11, wherein
The second belt ply (42B) is located radially inward of the full band (44), and the third belt ply (42C) is located radially outward of the full band (44).

13. The heavy duty tire (2) according to any one of claims 7 to 11, wherein
the belt (38) is located radially inward of the full band (44).

## Patentansprüche

1. Schwerlastreifen (2) mit einem Nennaspektverhältnis von 65% oder weniger, wobei der Schwerlastreifen (2) umfasst:
eine Lauffläche (4), die mit einer Straßenoberfläche in Kontakt kommt;
ein Paar Seitenwände (6), die jeweils mit einem Ende der Lauffläche (4) verbunden sind und in einer radialen Richtung innen von der Lauffläche (4) angeordnet sind;
ein Paar Wulstschutzbänder (8), die jeweils in der radialen Richtung innen von der Seitenwand (6) angeordnet sind und mit einer Felge (R) in Kontakt kommen;
ein Paar Wülste (10), die jeweils in einer axialen Richtung innen von dem Wulstschutzband (8) angeordnet sind; und
ein Band (40), das in der radialen Richtung innen von der Lauffläche (4) angeordnet ist und einen spiralförmig gewickelten Bandkord umfasst, wobei
mindestens drei Umfangsrillen (30) an der Lauffläche gebildet sind, wodurch mindestens vier Landabschnitte (60) in der Lauffläche (4) gebildet sind,
unter den mindestens drei Umfangsrillen (30) eine Umfangsrille, die auf jeder Außenseite in einer axialen Richtung angeordnet ist, eine Schulterumfangsrille (30s) ist,
ein Landabschnitt, der in der axialen Richtung außen von der Schulterumfangsrille (30s) angeordnet ist, ein Schulterlandabschnitt (60s) ist,
das Band (40) ein Vollband (44), das Enden aufweist, die einander über eine Äquatorebene hinweg gegenüberliegen, und ein Paar Randbänder (46) umfasst, die in der radialen Richtung außen von den Enden des Vollbands (44) angeordnet sind, und
eine Außenfläche jedes Wulstschutzbandes (8) eine Passaussparung (62) aufweist, in die ein Horn (F) der Felge (R) passt,
**dadurch gekennzeichnet, dass**
ein Verhältnis (SF/WS) eines Abstands (SF) in der axialen Richtung von der Schulterumfangsrille (30s) zu dem Ende (44e) des Vollbands (44) zu einer Breite (WS) in der axialen Richtung des Schulterlandabschnitts (60s) nicht kleiner als 10% und nicht größer als 50% ist.

2. Schwerlastreifen (2) nach Anspruch 1, wobei
die Passaussparung (62) eine konkav gekrümmte Oberfläche (64) aufweist, deren Kontur in einem Meridianquerschnitt des Reifens (2) ein Bogen ist, und
die konkav gekrümmte Oberfläche (64) einen Radius (Rb) von nicht kleiner als 5,0 mm und nicht größer als 40,0 mm aufweist.

3. Schwerlastreifen (2) nach Anspruch 1 oder 2, wobei ein Verhältnis (WT/WA) einer Breite (WT) der Lauffläche (4) zu einer Querschnittsbreite (WA) des Reifens (2) nicht kleiner als 0,60 und nicht größer als 0,90 ist.

4. Schwerlastreifen (2) nach einem der Ansprüche 1 bis 3, wobei ein Verhältnis einer Breite (WB) des Bands (40) zu einer Breite (WT) der Lauffläche (4) nicht kleiner als 0,60 und nicht größer als 0,90 ist.

5. Schwerlastreifen (2) nach einem der Ansprüche 1 bis 4, wobei jedes Ende (44e) des Vollbands (44) in der axialen Richtung außen von der Schulterumfangsrille (30s) angeordnet ist.

6. Schwerlastreifen (2) nach einem der Ansprüche 1 bis 5, wobei ein Abstand (We) in der axialen Richtung von dem Ende (44e) des Vollbands (44) zu einem inneren Ende (46ue) des Randbands (46) nicht weniger als 10 mm beträgt.

7. Schwerlastreifen (2) nach einem der Ansprüche 1 bis 6, ferner umfassend einen Gürtel (38), der eine große Anzahl von Gürtelkorden umfasst, die miteinander ausgerichtet sind, wobei
der Gürtel (38) drei Gürtellagen (42) umfasst, die eine erste Gürtellage (42A), eine zweite Gürtellage (42B) und eine dritte Gürtellage (42C) sind,
die Gürtellage, die radial außen von der ersten Gürtellage (42A) angeordnet ist, die zweite Gürtellage (42B) ist,
die Gürtellage, die radial außen von der zweiten Gürtellage (42B) angeordnet ist, die dritte Gürtellage (42C) ist,
die zweite Gürtellage (42B) eine größere axiale Breite als die erste Gürtellage (42A) und die dritte Gürtellage (42C) aufweist,
das Randband (46) radial außen von der dritten Gürtellage (42C) angeordnet ist, und
das äußere Ende (46se) des Randbands (46) axial innen von dem Ende der dritten Gürtellage (42C) angeordnet ist.

8. Schwerlastreifen (2) nach Anspruch 7, wobei
das äußere Ende (46se) des Randbands (46) axial innen von dem Ende der ersten Gürtellage (42A) angeordnet ist.

9. Schwerlastreifen (2) nach Anspruch 7 oder 8, wobei
ein inneres Ende (46ue) des Randbands (46) axial außen von einem Boden der Schulterumfangsrille (30s) angeordnet ist.

10. Schwerlastreifen (2) nach Anspruch 7 oder 8, wobei
ein inneres Ende (46ue) des Randbands (46) axial innen von einem Boden der Schulterumfangsrille (30s) angeordnet ist.

11. Schwerlastreifen (2) nach einem der Ansprüche 1 bis 10, wobei
eine Position des äußeren Endes (46se) des Randbands (46) mit einer Position des Endes (44e) des Vollbands (44) in der axialen Richtung übereinstimmt, oder
das äußere Ende (46se) des Randbands (46) axial außen von dem Ende (44e) des Vollbands (44) angeordnet ist.

12. Schwerlastreifen (2) nach einem der Ansprüche 7 bis 11, wobei
die zweite Gürtellage (42B) radial innen von dem Vollband (44) angeordnet ist, und die dritte Gürtellage (42C) radial außen von dem Vollband (44) angeordnet ist.

13. Schwerlastreifen (2) nach einem der Ansprüche 7 bis 11, wobei
der Gürtel (38) radial innen von dem Vollband (44) angeordnet ist.

## Revendications

1. Pneumatique pour service intensif (2) ayant un rapport d'aspect nominal de 65 % ou moins, le pneumatique pour service intensif (2) comprenant :
une bande de roulement (4) qui vient en contact avec une surface routière ;
une paire de parois latérales (6), qui sont chacune connectées à une extrémité de la bande de roulement (4) et qui sont situées à l'intérieur de la bande de roulement (4) dans une direction radiale ;
une paire de bandelettes de talon (8) qui sont chacune situées à l'intérieur de la paroi latérale (6) dans la direction radiale et qui viennent en contact avec une jante (R) ;
une paire de talons (10) qui sont chacun situés à l'intérieur de la bandelette de talon (8) dans une direction axiale ; et
une bande (40) qui est située à l'intérieur de la bande de roulement (4) dans la direction radiale et qui inclut un câblé de bande enroulé en spirale, dans lequel
au moins trois rainures circonférentielles (30) sont formées sur la bande de roulement, moyennant quoi au moins quatre portions en relief (60) sont formées dans la bande de roulement (4),
parmi lesdites au moins trois rainures circonférentielles (30), une rainure circonférentielle située sur chaque côté extérieur dans une direction axiale est une rainure circonférentielle d'épaulement (30s),
une portion en relief située à l'extérieur de la rainure circonférentielle d'épaulement (30s) dans la direction axiale est une portion en relief d'épaulement (60s),
la bande (40) inclut une bande complète (44) ayant des extrémités opposées l'une à l'autre à travers un plan d'équateur, et une paire de bandes de bord (46) situées à l'extérieur des extrémités de la bande complète (44) dans la direction radiale, et
une surface extérieure de chaque bandelette de talon (8) a un évidement d'ajustage (62) dans lequel une bride (F) de la jante (R) est ajustée,
**caractérisé en ce que**
un rapport (SF/WS) d'une distance (SF) dans la direction axiale depuis la rainure circonférentielle d'épaulement (30s) jusqu'à l'extrémité (44e) de la bande complète (44), sur une largeur (WS) dans la direction axiale de la portion en relief d'épaulement (60s), n'est pas inférieur à 10 % et n'est pas supérieur à 50 %.

2. Pneumatique pour service intensif (2) selon la revendication 1, dans lequel l'évidement d'ajustage (62) a une surface incurvée concave (64) dont un contour dans une section transversale méridienne du pneumatique (2) est un arc, et
la surface incurvée concave (64) a un rayon (Rb) qui n'est pas inférieur à 5,0 mm qui n'est pas supérieur à 40,0 mm.

3. Pneumatique pour service intensif (2) selon la revendication 1 ou 2, dans lequel un rapport (WT/WA) d'une largeur (WT) de la bande de roulement (4) sur une largeur de section transversale (WA) du pneumatique (2) n'est pas inférieur à 0,60 et n'est pas supérieur à 0,90.

4. Pneumatique pour service intensif (2) selon l'une quelconque des revendications 1 à 3, dans lequel un rapport d'une largeur (WB) de la bande (40) sur une largeur (WT) de la bande de roulement (4) n'est pas inférieur à 0,60 et n'est pas supérieur à 0,90.

5. Pneumatique pour service intensif (2) selon l'une quelconque des revendications 1 à 4, dans lequel chaque extrémité (44e) de la bande complète (44) est située à l'extérieur de la rainure circonférentielle d'épaulement (30s) dans la direction axiale.

6. Pneumatique pour service intensif (2) selon l'une quelconque des revendications 1 à 5, dans lequel une distance (We) dans la direction axiale depuis l'extrémité (44e) de la bande complète (44) jusqu'à une extrémité (46ue) de la bande de bord (46) n'est pas inférieure à 10 mm.

7. Pneumatique pour service intensif (2) selon l'une quelconque des revendications 1 à 6, comprenant en outre une ceinture (38) incluant un grand nombre de câblés de ceinture alignés les uns avec les autres, dans lequel
la ceinture (38) inclut trois nappes de ceinture (42) qui sont une première nappe de ceinture (42A), une deuxième nappe de ceinture (42B), et une troisième nappe de ceinture (42C),
la nappe de ceinture située radialement à l'extérieur de la première nappe de ceinture (42A) est la deuxième nappe de ceinture (42B),
la nappe de ceinture située radialement à l'extérieur de la deuxième nappe de ceinture (42B) est la troisième nappe de ceinture (42C),
la deuxième nappe de ceinture (42B) a une largeur axiale plus grande que la première nappe de ceinture (42A) et que la troisième nappe de ceinture (42C),
la bande de bord (46) est située radialement à l'extérieur de la troisième nappe de ceinture (42C), et
l'extrémité extérieure (46se) de la bande de bord (46) est située axialement à l'intérieur de l'extrémité de la troisième nappe de ceinture (42C).

8. Pneumatique pour service intensif (2) selon la revendication 7, dans lequel l'extrémité extérieure (46se) de la bande de bord (46) est située axialement à l'intérieur de l'extrémité de la première nappe de ceinture (42A).

9. Pneumatique pour service intensif (2) selon la revendication 7 ou 8, dans lequel
une extrémité intérieure (46ue) de la bande de bord (46) est située axialement à l'extérieur d'un fond de la rainure circonférentielle d'épaulement (30s).

10. Pneumatique pour service intensif (2) selon la revendication 7 ou 8, dans lequel
une extrémité intérieure (46ue) de la bande de bord (46) est située axialement à l'intérieur d'un fond de la rainure circonférentielle d'épaulement (30s).

11. Pneumatique pour service intensif (2) selon l'une quelconque des revendications 1 à 10, dans lequel
une position de l'extrémité extérieure (46se) de la bande de bord (46) coïncide avec une position de l'extrémité (44e) de la bande complète (44) dans la direction axiale, ou
l'extrémité extérieure (46se) de la bande de bord (46) est située axialement à l'extérieur de l'extrémité (44e) de la bande complète (44).

12. Pneumatique pour service intensif (2) selon l'une quelconque des revendications 7 à 11, dans lequel
la deuxième nappe de ceinture (42B) est située radialement à l'intérieur de la bande complète (44), et la troisième nappe de ceinture (42C) est située radialement à l'extérieur de la bande complète (44).

13. Pneumatique pour service intensif (2) selon l'une quelconque des revendications 7 à 11, dans lequel
la ceinture (38) est située radialement à l'intérieur de la bande complète (44).
